Europäisches Patentamt

European Patent Office

Office européen des brevets

(19)

(11) Publication number: **0 088 504**
**B1**

(12)    EUROPEAN PATENT SPECIFICATION

(45) Date of publication of patent specification: **30.09.87**    (51) Int. Cl.⁴: **G 06 F 15/24**

(21) Application number: **83300431.0**

(22) Date of filing: **27.01.83**

(54) Method and system for directing articles to work stations.

(30) Priority: **29.01.82 US 344174**

(43) Date of publication of application:
**14.09.83 Bulletin 83/37**

(45) Publication of the grant of the patent:
**30.09.87 Bulletin 87/40**

(84) Designated Contracting States:
**DE FR GB NL**

(56) References cited:
**EP-A-0 037 649**
**DE-A-2 449 729**
**FR-A-1 593 584**
**GB-A-2 076 201**
**US-A-4 181 947**

(73) Proprietor: **LEAR SIEGLER, INC.**
**507 Plymouth Avenue North East**
**Grand Rapids Michigan (US)**

(72) Inventor: **Hemond, Robert Francis**
**1411 Marwood, South East**
**Grand Rapids Michigan (US)**

(74) Representative: **Robinson, Anthony John**
**Metcalf et al**
**Kilburn & Strode 30 John Street**
**London, WC1N 2DD (GB)**

Courier Press, Leamington Spa, England.

### Description

This invention relates to a method and system for directing articles (materials) to work stations by a conveying system such as a sorting conveying system.

Assembly areas typically include a plurality of work stations at which individual articles are assembled and a storage zone wherein articles to be assembled are stored. A variety of conveying systems have been developed to deliver articles from the storage zone to the individual work stations. More particularly, the conveying systems used are sorting conveyors, capable of delivering an individual article to a predetermined work station.

However, known sorting conveyor systems require some type of identification to be placed on the conveyed article so that the identification may be read by the system during article transportation to properly route the article. This requires the articles to be carefully and laboriously labelled, and further requires the identification and properly directing the articles through the system and diverting them at the destination work stations. EP—A—0037649 describes a system of this type, requiring that the articles are individually labelled.

Additionally, it is desirable to collect management information from the individual work stations. More particularly, it is desirable to monitor the number and types of articles processed at the work stations to facilitate scheduling, to control inventory and work flow, and to evaluate the speed at which the operators are working. Additionally, it is also desirable to monitor the arrival, break, and departure times of the operators.

Typically, management data is collected by supervisors or by the operators themselves. In either event, a written record is maintained for each employee, setting forth the information outlined above, supplemented by punch time cards. This information is then analyzed by management personnel to schedule, to order inventory, and to determine whether the operators are performing satisfactorily. Optionally, the data may be first placed into some type of computerized data bank to ease and expedite this analysis. However, the written records are subject to human error as well as intentional misreporting, particularly if kept by the operators. The efficiency information is subject to transcription error if transferred to a data bank. Finally, the data collection requires excessive worker or supervisor time and gives the individual workers a feeling that they are being closely supervised.

GB—A—2076201 describes the use of separate time clocks, disposed at a number of work stations in a factory, and arranged to receive as input the identity of individual workers and the tasks to be performed by those workers. The time clocks thus act to monitor the progress of the work and the performance of the workers; of course, this means that the individual workers have a strong feeling of being closely supervised. The method and system there described is not primarily related to the direction of articles (materials) to work stations by a conveying system; nevertheless, the document discloses the features set out in the precharacterising features of the main claims of the present application.

The aforementioned problems are solved by the present invention. According to one aspect of the present invention there is provided a method of acquiring real time information regarding the status of work materials in process within a work area, the work area including a plurality of work stations at which the work materials are processed, comprising transporting work materials to be processed from a storage zone to the work stations characterised in that the transporting is in response to requests from the work stations; by storing in computer storage means data for each work material transported including a station number unique to the work station to which said material is transported; and by displaying the data facilitating future work material flow through the work area.

According to another aspect of the invention there is provided a system for controlling, and collecting real time data relative to, the flow of work materials within a work area including a plurality of work stations at which the said materials are to be processed, means for transporting the said materials from a storage zone to the work stations, and display means coupled to computer circuit means for displaying data to provide real time information relating to materials in process; characterised by means at each work station for indicating that unprocessed work materials are requested at the said work station; and in that the means for transporting the materials comprises conveyor means including means for directing a particular material to a particular work station; computer storage means for storing data for each material transported on the conveyor means, the said data including a station number unique to the work station to which the said material is to be transported; and the computer circuit means being coupled to the indicating means and to the directing means and to the computer storage means for controlling the directing means in response to the station numbers to deliver each of the transported materials to the desired work station. Additionally the computer circuit means may maintain a record for each work station of materials transported to that work station.

With a system constructed in accordance with the present invention, material flow is controlled and worker efficiency may be monitored by the computer circuit means. By simply storing a number corresponding to the work station to which each material is to be sent, the computer generates appropriate control signals to cause the conveyor directing means to direct the article to the work station. Additionally, as the materials are sent, the computer may maintain a log of the materials sent to the individual work stations so that an operator reviewing the log may easily and readily schedule, plan inventory, or evaluate the efficiency of workers at the work station.

Systems constructed in accordance with the present invention have several advantages over known systems. First, operator efficiency data for each work station may be automatically compiled by the computer as articles (materials) are dispatched. Accordingly, the need for supervisory personnel and/or the need for individual operators to maintain time records may be eliminated. Second, the need for identification on the articles (materials) transported, and the associated equipment for reading and diverting the articles (materials), is eliminated. Third, the workers do not feel as if someone is continually monitoring their progress, giving the workers at least the illusion of minimal supervision. Fourth, the automatic recording of efficiency information by the computer, if used, reduces the possibility for error both in record keeping and record transcription.

In a preferred construction, a common bus line interconnects the computer with both the work station indicating means and the conveyor directing means. The computer can communicate with any one of the work stations or any one of the components of the conveyor directing means by sending a signal addressed to that element over the bus line. The work station indicating means may be constructed so as to be releasably connected to the bus line so that stations may be added to or deleted from the system as necessary. This greatly reduces the complexity and expense of hard wiring the computer to the associated elements, and also vastly increases the modularity of the system so that the system may expand or contract as work needs dictate.

The invention may be carried into practice in various ways but one system and its method of operation in accordance with the present invention will now be described by way of example with reference to the accompanying drawings, in which:

Figure 1 is a plan view of the conveyor system;

Figure 2 is a fragmentary, perspective view of a work station;

Figure 3 is a fragmentary, elevational view of the area within line III in Figure 2;

Figure 4 is a fragmentary, schematic view of the computer and the bus line connections within the system; and

Figure 5 is a flow chart of information and activity paths within the system.

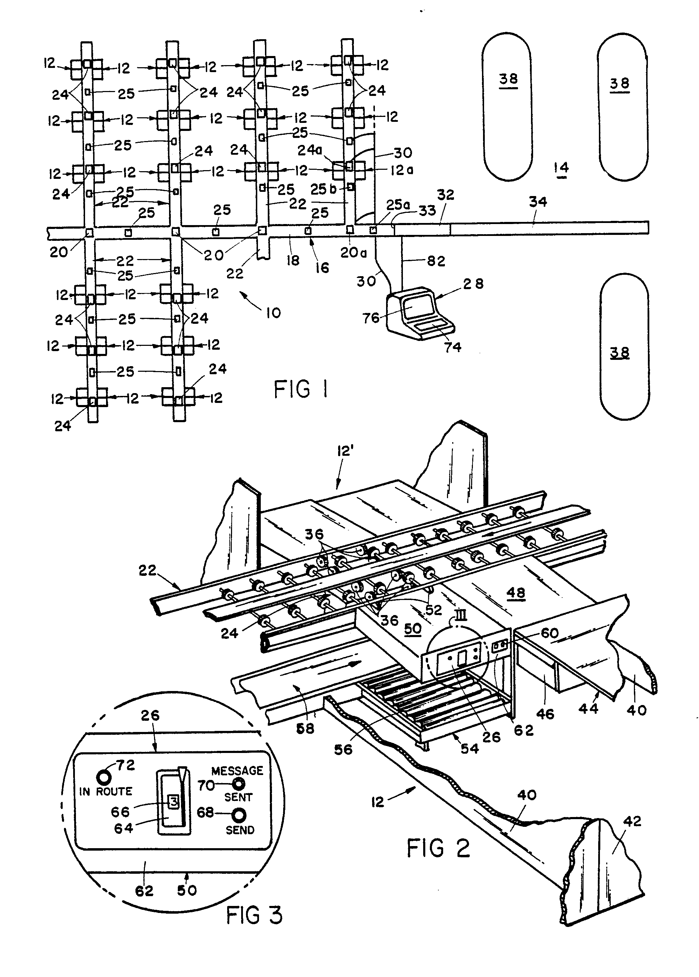

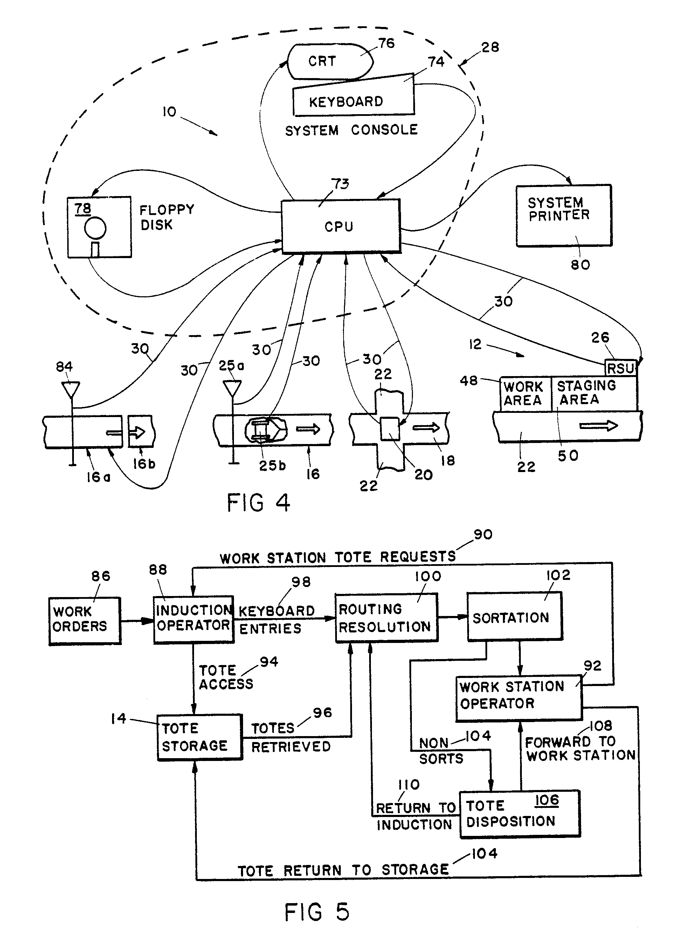

A conveyor and monitor system 10 (Figure 1) includes a plurality of work stations 12, a storage zone 14, and a conveyor 16 for transporting material or articles from the storage zone to the individual work stations. The conveyor 16 in turn includes primary sort line 18 and secondary sort lines 22 ·leading laterally therefrom. Primary diverters 20 are now positioned along the primary line 18 to divert articles off the primary line· and onto the secondary lines 22. Similarly, secondary diverters 24 are positioned along the secondary lines 22 to divert articles off the secondary lines and onto individual work stations 12. Position indicators 25 are positioned along the primary line 18 and the secondary lines 22 to track the position of articles on the conveyor 16. Each of the work stations 12 includes a remote station unit 26 (Figures 2 and 3). A computer 28 is coupled through bus line 30 to all of primary diverters 20, secondary diverters 24, position indicators 25, and remote station units 26 (Figure 1). The computer 28 contains information relating to each article transported on the conveyor 16, including a number unique to the particular work station 12 to which the article is to be transported.

When an operator at one of the stations 12 requires an article to be assembled, or otherwise processed, he communicates with the computer 28 using his remote unit 26. An operator seated at the computer 28 responds to the request and retrieves an appropriate article from the storage zone 14 and places the article on the conveyor 16. The computer operator then keys, or inputs, the unique number associated with the work station to which the article is to be delivered so that the computer 28 generates control signals, in response to the number and to information from the position indicators 25, to control diverters 20 and 24 to deliver the article to the desired station 12. Additionally, the computer maintains a log of the articles sent to each work station so that this information can be later displayed to evaluate the efficiency of the workers at the various stations.

The conveyor 16 (Figure 1) is of a construction well known to those having ordinary skill in the art and, consequently, a detailed explanation of its construction and operation is unnecessary. Suffice it to say that the conveyor 16 is a roller conveyor having a drive belt and includes the primary sort line 18 which in turn includes an induction area 32 and queue area 34. A gate 33 controls the release of articles from the induction area 32. The secondary sort lines 22 extend laterally from the primary line 18 and lead to the individual work stations 12. A primary diverter 20 is positioned at the intersection of each secondary sort line 22 with the primary line 18 so that the diverter may selectively transfer articles travelling on the primary line to the appropriate secondary line. Secondary diverters 24 are positioned along the secondary lines 22 generally proximate each of work stations 12 and are identical to the primary diverters 20. One of secondary diverters 24 is seen in Figure 2, including diverter wheels 36 oriented generally perpendicularly to the wheels of the secondary line 22. The position indicators 25 are also of well known construction and may, for example, be either photosensitive or mechanical switches. One of the indicators 25 is positioned between each pair of adjacent diverters 20 and 24.

The storage zone 14 (Figure 1) includes carousels 38 in which articles, or work materials, to be assembled, or otherwise processed, are stored. In the preferred embodiment, these articles comprise electronic component kits which are to be assembled at the work stations. Each kit is placed in a plastic open-topped box, skip or pan — hereinafter referred to as a tote — which is approximately 150 mm deep, 510 mm wide, and 610 mm long. The totes containing the unassembled kits are placed in carousels 38 and later removed and placed on the queue area 34 in response to requests from work station operators.

Each work station 12 (Figure 2) is defined by one of the secondary lines 22, opposed side walls 40 extending laterally therefrom, and an end wall 42 extending between the side walls opposite secondary line 22. A bench 44, including a drawer 46 for tools and supplies, is located adjacent one of the side walls 40. Extending between, and generally level with the secondary line 22 and the desk 44 is a work area 48. Immediately adjacent, and generally level with, both the secondary line 22 and the work area 48 is a staging area 50, which is also adjacent the adjacent diverter 24 so that articles diverted from the secondary line 22 into the work station 12 are deposited on the staging area. The staging area 50 further includes two rollers 52 adjacent the secondary line 22 to facilitate the transfer of articles onto the staging area. A return conveyor spur 54 is located directly below staging area 50 and includes a plurality of closely spaced rollers 56 leading to a return conveyor 58 located directly below the secondary line 22. The return conveyor 58 leads to a storage zone for assembled kits and in the preferred embodiment is a slider belt conveyor. The staging area 50 further includes a face 62 in which is mounted a conventional electrical outlet 60. An adjacent work station (12' in Figure 2) is located opposite the station 12 across secondary line 22.

The remote station unit 26 (Figures 2 and 3) is also mounted in the forward face 62 of the staging area 50. The unit 26 includes a message switch 64 (Figure 3), which is a conventional multi-position thumb wheel switch. In the preferred embodiment, the switch is capable of ten positions indicated by a numeral 0 to 9 in a window 66. In the preferred embodiment, only four of the switch positions are used as follows:

1. Tote requested: the work station operator is ready to receive a tote;

2. Tote received: a tote sent to the work station has been received;

3. Leaving station: the work station operator is leaving the station for a short period of time, for example a break; and

4. Station off: the work station operator is leaving the station for an extended period of time, for example at the end of the work day.

By depressing a switch or send button 68, the signal selected on the thumb wheel switch 64 is transmitted over the bus line 30 to the computer 28 (see also Figure 1). A "Message Sent" light 70 is lit to indicate that a message has been sent from unit 26 to computer 28. This light remains lit for a brief period of time after the message has been sent to inform the work station operator that the message has been received by the computer 28. If the message sent is illegal or not allowed in the proper sequence, the light 70 will blink informing the work station operator to select a different message code on the thumb wheel switch 64 and retransmit by depressing the send button 68. An "In Route" light 72 is lit to indicate that a tote is in route from the storage area 14 to the work station 12. This light will remain lit until the work station operator transmits a "tote received" signal back to the computer 28.

The computer 28 (Figures 1 and 4) is also of well known construction, being a mini or micro-computer including a central processing unit (CPU) 73, keyboard 74, and CRT display screen 76. For secondary storage, the computer 28 also includes floppy disk 78 (Figure 4). Finally, a printer 80 is also coupled to the computer 28 to print permanent records of activities monitored by the computer, including worker efficiency reports.

The computer 28 (Figures 1 and 4) is connected, or coupled, through the bus line 30 to all of the position indicators 25, primary diverters 20, secondary diverters 24, and remote station units 26. Signals are received by the computer 28 from both the pulse position indicators and the remote station units, while on the other hand control signals are generated by the computer and sent to the diverters 20 and 24 and the remote station units 26. Additionally, the computer 28 is connected through a line 82 to the induction gate 33. The bus line 30, in the preferred embodiment, is a four-wire bus providing serial two-way communications between the computer 28 and the coupled devices. Two lines are used to send signals from the computer, while the other two lines are used to transmit messages to the computer. Each of the diverters 20 and 24, position indicators 25, and remote station units 26 is identified by a unique address. When the computer 28 sends a signal to a particular device, it sends a communication word which includes an address portion and a message portion. Although all devices connected to the computer 28 receive the message, only the device assigned the particular address will respond to the message received. Similarly, when the computer 28 desires information from any one of the devices connected to the bus line 30, the computer polls that device using the address assigned to that device. If that device desires to transmit a message, the message is forwarded to the computer 28, whereupon the computer appropriately processes the message.

It should be noted that although several lines are designated 30 in Figure 4, the lines are shown separately in Figure 4 only for clarity. All of the position indicators 25, diverters 20 and 24, and remote station units 26 are connected to the common bus line 30. Position indicators 25, such as the optical switches 25a and mechanical switches 25b shown in Figure 4, are connected to the computer 28 through the bus line 30. Accordingly, when an article is transported on the conveyor 16 and trips one of switches 25, that switch transmits an appropriate signal to the computer 28 over the bus line 30 in response to being polled.

Each primary diverter 20 is also connected through the bus line 30 to the computer 28 (Figure 4). When an article transported on the primary line 18 approaches a diverter 20, and when the computer 28 determines that that particular diverter 20 must divert the article onto one of the adjacent secondary lines 22, a control signal is generated by the computer 28 and transmitted to that diverter 20 over the bus line 30, arming the diverter. Accordingly, when the article is directly over the diverter 20 as determined by switches (not shown), the diverter reacts to transfer the article onto the appropriate secondary line. The diverters 24 positioned along each secondary line 22 are actuated in a similar manner to divert, or direct, each article to its selected destination work station.

Each remote station unit 26 (Figure 4) is also connected through the bus line to the computer 28. Messages are transmitted to the computer by selecting an appropriate message number 66 on the thumb wheel switch 64 and depressing the send button 68 (see also Figure 3). The computer 28 may illuminate either one of the lights 70 and 72 by delivering the appropriate signals thereto.

Also connected through the bus line 30 to the computer 28 are a plurality of position switches 84 (Figure 4). These switches indicate to the computer 28 when an article is leaving a first section of conveyor 16a and entering a second section of conveyor 16b. In response to such an indication, the computer 28 generates appropriate control signals to deactivate the drive belt in section 16a and to activate movement of the drive belt in section 16b. In this manner, operation of the conveyor is limited only to those sections which are actually in demand.

All of indicators 25, diverters 20 and 24, and units 26 are releasably coupled to the bus line 30 so that these devices may be readily added to, or deleted from, the system 10 to correspond to needs of the system.

Operation

After the system 10 is assembled as described above, it is necessary to initialize the system. Position indicators 25, diverters 20 and 24, and remote station units 26 are assigned a unique address so that each of these devices is individually identifiable by the computer and may be individually addressed. This identification data is then stored in the computer 28, and more particularly on the floppy disk 78, together with identification of the route from the induction area 32 to each of the work stations 12. For example, to deliver an article to work station 12a (Figure 1), the computer 28 must be programmed to issue 1) a "right divert" control signal to diverter 20a after receiving an article-present signal from position indicator 25a and 2) a "right divert" control signal to diverter 24a after receiving an article-present signal from indicator 25b to deposit the article on the staging area of work station 12a. A target assembly time for each type of kit is also stored on the disk 78. Further, the computer 28 must be programmed to display messages from the individual remote station units 26 on the CRT 76. Additional programming is required to maintain a log of articles sent to each work station 12. All initialization and programming may be readily implemented by those having ordinary skill in the art. ·

As workers arrive at their individual work stations 12, they so indicate to the computer 28 through their remote station units 26. Message switch 64 is rotated until message number 1 appears in window 66 and switch 70 is depressed, indicating that a tote is requested at that particular work station. When the computer 28 polls that work station 12 over line 30, the remote station unit 26 transmits a "tote request" message to the computer, which displays the message on the CRT 76. Upon viewing the tote request, the operator at the computer 28 retrieves an appropriate article to be processed from one of the carousels 38 in the storage zone 14. If a variety of types of articles are stored in the storage zone 14, the operator should select a type appropriate for the particular work station. Preferably, the computer contains information specifying the types of articles which may be sent to each work station according to a worker's efficiency and/or skill or the facilities available at the station. This information is displayed on the CRT 76 with the tote request. After the article is retrieved from the zone 14, it is placed on the queue area 34, whereupon it indexes forward toward the induction area 32 until the article abuts the gate 33. The computer operator must enter data into the computer 28 by the keyboard 74 relating to the article — a first number is unique to the kit; a second number is unique to the type of kit; a third number is unique to the address of the work station to which the article is to be delivered. The operator then releases the article permitting the gate 33 to open so that the tote is allowed to leave the induction area 32 and travel along the conveyor 16.

After leaving the induction area, the position of the tote is monitored by the position indicators 25, which are continually polled by the computer 28 over the bus line 30. In response to the signals from the position indicators 25 and in response to the routing information stored on the floppy disk 78, the computer 28 generates appropriate control signals and sends them to the appropriate diverters 20 and 24 over the bus line 30 to direct the article to the addressed work station 12. Additionally, when the address of a work station is entered on the keyboard 74 and an article released, the computer 28 sends a message to the remote station unit 26, illuminating the light 72, indicating that a tote is in route to the work station. When the tote arrives, the operator at the work station rotates his thumb wheel 64 until message number 2 appears in the window 66 and depresses his send button 68 to indicate that the tote has been received. Computer 28 then returns a control signal extinguishing the light 72.

A similar procedure is repeated for each work station 12 in the system 10. As totes are requested by the individual station operators, the induction operator retrieves the articles from zone 14 and inducts them onto the conveyor 16 as described.

When a work station operator completes assembly of a kit, he returns the kit to the tote and places the tote on the return spur 54, pushing the tote onto the return belt 58. The operator then requests a new tote. The return belt 58 returns the tote to the storage zone 14, where the tote is replaced on one of the carousels 38.

If a work station operator desires to leave his work station 12 for a brief period after completing assembly of a kit, he selects message number 3 on his thumb wheel switch 64 and presses the send button 68. Upon returning to his work station, the operator again requests a tote. Additionally, the operator may indicate that he will be leaving his station for an extended period of time, such as at the end of the day, by transmitting a message number 4 on his remote station unit 26.

The computer 28 collects real time information in response to messages received from the units 26 and keyboard 74 relating to the status of materials in process. When a tote is inducted onto the conveyor 16, the operator at the computer 28 enters three numbers, the first of which is unique to the kit, the second unique to the type of kit, and the third unique to the work station to which the article is to be delivered (i.e., the work station address). This information is then recorded on the floppy disk 78 with the target time for assembly of the kit type, which may be retrieved from information stored on the disk. Additionally, the computer 28 automatically records the time at which each article is inducted, as well as the time at which each operator arrives at his work station, leaves for, and returns from breaks, and leaves at the end of the work day, all in response to messages sent from the work station operators over their individual remote station units. From this timing data, the computer computes the residence time of each article at the work station at which same was processed and records this information also. This data may be printed out at any time on the printer 80 and can provide such information as the following:

1. work station assignments by work station;
2. work stations which exceed the target time to complete kit assembly;
3. work station assignments by kit number;
4. work stations on line;
5. hours worked by work stations;
6. work stations which exceed the break time;
7. the number of totes dispatched during a specified shift;
8. work stations requiring help; and
9. work stations about to complete assembly of current kit.

This information can then be analyzed to plan scheduling, to acquire inventory, and to determine where management intervention is necessary, for example to determine where help and supervision are necessary and to reward above-average performances.

Figure 5 summarizes the processing of information and the activities of the operators within the system 10. The induction operator 88 is informed of work orders 86, so that the operator can make decisions regarding which kits must be assembled to fill the work orders. The induction operator 88 is also informed of tote requests 90 from work station operators 92, and in response accesses totes as indicated at 94 from the storage zone 14. The requested totes are retrieved from storage as indicated at 96 and after they have passed into the induction area 32 (see also Figure 1), the induction operator 88 makes keyboard entries, as indicated at 98, relating to the article and the destination work station. The computer 28 makes routing resolutions 100 based on information stored on the floppy disk 78 and the keyboard entries. The totes are then sorted as indicated at 102 as they travel along the conveyor 16 to be directed to the appropriate station operators 92. After a work station operator 92 has completed assembly of the kit, he places the kit in the tote and returns the tote to storage as indicated at 104 via the return conveyor 58 (see also Figure 2) and issues a new tote request 90 to the induction operator 88. If a tote is not properly directed to a work station as at 104, a tote disposition decision 106 is made, and the tote is either manually transported to the work station as at 108 or reinducted as at 110.

**Claims**

1. A method of acquiring real time information regarding the status of work materials in process within a work area, the work area including a plurality of work stations (12) at which the work materials are processed, comprising transporting work materials to be processed from a storage zone to the work stations characterised in that the transporting is in response to requests from the work stations; by storing in computer storage means (78) data for each work material transported including a station number unique to the work station to which said material is transported; and by displaying the data facilitating future work material flow through the work area.

2. A method according to claim 1 characterised by determining the residence time of each work material at a respective work station (12), the said data further comprising a residence time number unique to said residence time.

3. A method according to claim 1 or claim 2 characterised in that the said data further comprises a target time number unique to the target residence time for the respective work material.

4. A method according to claim 1 or claim 2 or claim 3 characterised in that the said data further comprises a type number unique to the type of said work material.

5. A method according to any of claims 1 to 4 characterised in that the said data further comprises a transport time number unique to the time at which each said work material is transported to the respective work station.

6. A method according to any of claims 1 to 5 characterised in that the said data comprises a material number unique to the said work material so that an operator can determine at which work station a particular material was processed.

7. A method according to any of claims 1 to 6 characterised by indicating at the work station when material is in route to any said work station.

8. A system (10) for controlling, and collecting real time data relative to, the flow of work materials within a work area including a plurality of work stations (12) at which the said materials are to be processed, means for transporting the said materials from a storage zone (14) to the work stations, and display means (76, 80) coupled to computer circuit means (73) for displaying data to provide real time information relating to materials in process; characterised by means (64, 68) at each work station for indicating that unprocessed work materials are requested at the said work station; and in that the means for transporting the materials comprises conveyor means including means (20, 24) for directing a particular material to a particular work station; computer storage means (78) for storing data for each material transported on the conveyor means, the said data including a station number unique to the work station to which the said material is to be transported; and the computer circuit means (73) being coupled to the indicating means (64, 68) and to the directing means (20, 24) and to the computer storage means (78) for controlling the directing means in response to the station numbers to deliver each of the transported materials to the desired work station.

9. A system according to claim 8 characterised in that the said data further includes a target time number unique to the target residence time required to process said material at said work station.

10. A system according to claim 8 or claim 9 wherein each of said materials is of a certain type, characterised in that said data further includes a type number unique to said material type.

11. A system according to claim 8 or claim 9 or claim 10 characterised in that said data further includes a material number unique to said material, whereby an operator viewing said display means can determine at which work station each of said materials was processed.

12. A system according to any of claims 8 to 11 characterised in that said data further comprises a transport time number unique to the time at which said material is transported.

13. A system according to any of claims 8 to 12 characterised in that each work station further includes second means (72) coupled to said computer circuit means (73) for indicating that a material is in route to said work station.

14. A system according to any of claims 8 to 13 characterised in that each work station further includes means (64, 68) coupled to said computer circuit means (73) for indicating that an operator is not present at said work station.

15. A system according to any of claims 8 to 14 characterised in that the conveyor means (16, 18, 22) further comprises means (25) coupled to said computer means for indicating the position of materials on said conveyor means and wherein the computer means control said directing means (20, 24) further in response to said position indicating means.

16. A system as claimed in any of claims 8 to 15 characterised in that the computer circuit means (73) is connected to said work stations (12) by a bus line (30) which is releasably coupled to the work stations so that work stations can be readily added to or deleted from said system.

17. A system as claimed in any of claims 8 to 16 characterised in that the said data further includes a residence time number unique to the actual residence time of the work material at the work station.

18. A system as claimed in any of claims 8 to 17 wherein each work material is of a certain type, characterised in that said computer storage means (78) further comprises means for storing second data relating to each work station including information indicative of material types to be processed at each work station.

**Patentansprüche**

1. Verfahren zum Erfassen von Realzeitinformationen, die den Zustand von Arbeitsmaterialien bei der Bearbeitung in einem Arbeitsbereich betreffen, wobei der Arbeitsbereich eine Mehrzahl von Bearbeitungsstationen (12) einschließt, bei denen die Arbeitsmaterialien bearbeitet werden, und wobei das Verfahren das Transportieren der zu bearbeitenden Arbeitsmaterialien von einer Speicherzone zu den Bearbeitungsstationen umfaßt, dadurch gekennzeichnet, daß das Transportieren in Abhängigkeit von Anforderungen von den Bearbeitungsstationen erfolgt durch das Speichern von Daten für jedes transportierte Arbeitsmaterial einschließlich einer Stationszahl, die für die Bearbeitungsstation, zu der das Material transportiert wird, einzigartig ist, in einer Komputerspeichereinrichtung (78) und durch Anzeigen der Daten, die den Durchgang von zukünftigem Arbeitsmaterial durch den Arbeitsbereich erleichtern.

2. Verfahren nach Anspruch 1, gekennzeichnet durch Bestimmen der Verweilzeit jedes Arbeitsmaterials an einer jeweiligen Bearbeitungsstation (12), wobei diese Daten weiterhin eine Verweilzeitzahl enthalten, die für die Verweilzeit einzigartig ist.

3. Verfahren nach Anspruch 1 oder Anspruch 2, dadurch gekennzeichnet, daß die Daten weiterhin eine Zielzeitzahl enthalten, die für die Zielverweilzeit für das jeweilige Arbeitsmaterial einzigartig ist.

4. Verfahren nach Anspruch 1 oder Anspruch 2 oder Anspruch 3, dadurch gekennzeichnet, daß die Daten weiterhin eine Typenzahl enthalten, die für die Art des Arbeitsmaterials einzigartig ist.

5. Verfahren nach einem der Ansprüche 1 bis 4, dadurch gekennzeichnet, daß die Daten weiterhin eine Transportzeitzahl enthalten, die für die Zeit einzigartig ist, mit der jedes Arbeitsmaterial zu der jeweiligen Bearbeitungsstation transportiert wird.

6. Verfahren nach einem der Ansprüche 1 bis 5, dadurch gekennzeichnet, daß die Daten eine Materialzahl enthalten, die für das Arbeitsmaterial einzigartig ist, so daß eine Bedienperson ermitteln kann, an welcher Arbeitsstation ein bestimmtes Material bearbeitet wird.

7. Verfahren nach einem der Ansprüche 1 bis 6, gekennzeichnet durch das Anzeigen an der Arbeitsstation, wenn Material auf dem Weg zu einer der Arbeitsstationen ist.

8. System (10) zum Steuern, und zum Erfassen von Realzeitdaten hinsichtlich des Durchgangs von Arbeitsmaterialien innerhalb eines Arbeitsbereichs, der eine Mehrzahl von Bearbeitungsstationen (12), an denen diese Materialien bearbeitet werden sollen, Einrichtungen zum Transportieren dieser Materialien von einer Speicherzone (14) zu den Bearbeitungsstationen, und Darstellungseinrichtungen (76, 80) einschließt, die mit Computerschaltkreiseinrichtungen (73) zum Anzeigen von Daten verbunden sind, um Realzeitinformationen zur Verfügung zu stellen, die sich auf in der Bearbeitung befindliche Materialien beziehen, gekennzeichnet durch Einrichtungen (64, 68) an jeder Bearbeitungsstation zum Anzeigen, daß unbearbeitete Arbeitsmaterialien an der Bearbeitungsstation angefordert werden und daß die Einrichtungen zum Transportieren der Materialien Fördereinrichtungen, die Einrichtungen (20, 24) zum Zuführen eines bestimmten Materials zu einer bestimmten Bearbeitungsstation umfassen, Computerspeichereinrichtungen (78) zum Speichern von Daten für jedes auf den Fördereinrichtungen transportierte Material, wobei diese Daten eine Stationszahl enthalten, die für die Bearbeitungsstation, zu der das Material transportiert werden soll, einzigartig ist, und die Computerschaltkreiseinrichtungen (73) umfaßt, die mit den Anzeigeeinrichtungen (64, 68) und mit den Zuführeinrichtungen (20, 24) und den Computerspeichereinrichtungen (78) zum Steuern der Zuführeinrichtungen in Abhängigkeit von den Stationszahlen verbunden ist, um jedes der transportierten Materialien zu der gewünschten Bearbeitungsstation zuzuführen.

9. System nach Anspruch 8, dadurch gekennzeichnet, daß die Daten weiterhin eine Zielzeitzahl enthalten, die für die Zielverweilzeit einzigartig ist, die erforderlich ist, um das Material an der Bearbeitungsstation zu bearbeiten.

10. System nach Anspruch 8 oder Anspruch 9, bei dem jedes der Materialien von einem bestimmten Typ ist, dadurch gekennzeichnet, daß die Daten weiterhin eine Typenzahl enthalten, die einzigartig für die Art des Materials ist.

11. System nach Anspruch 8 oder Anspruch 9 oder Anspruch 10, dadurch gekennzeichnet, daß die Daten weiterhin eine Materialzahl enthalten, die einzigartig für das Material ist, wobei eine Bedienperson, die die Darstellungseinrichtungen betrachtet, ermitteln kann, an welcher Bearbeitungsstation jedes der Materialien verarbeitet wurde.

12. System nach einem der Ansprüche 8 bis 11, dadurch gekennzeichnet, daß die Daten weiterhin eine Transportzeitzahl enthalten, die für die Zeit, mit der das Material transportiert wird, einzigartig ist.

13. System nach einem der Ansprüche 8 bis 12, dadurch gekennzeichnet, daß jede Bearbeitungsstation weiterhin eine zweite Einrichtung (72) enthält, die mit den Computerschaltkreiseinrichtungen (73) verbunden ist, um anzuzeigen, daß ein Material auf dem Weg zu der Bearbeitungsstation ist.

14. System nach einem der Ansprüche 8 bis 13, dadurch gekennzeichnet, daß jede Bearbeitungsstation weiterhin Einrichtungen (64, 68) enthält, die mit den Computerschaltkreiseinrichtungen (73) verbunden sind, um anzuzeigen, daß eine Bedienperson an der Bearbeitungsstation nicht anwesend ist.

15. System nach einem der Ansprüche 8 bis 14, dadurch gekennzeichnet, daß die Fördereinrichtungen (16, 18, 22) weiterhin eine Einrichtung (25) enthalten, die mit den Computereinrichtungen verbunden ist, um die Position der Materialien an den Fördereinrichtungen anzuzeigen, und wobei die Computereinrichtungen die Zuführeinrichtungen (20, 24) weiterhin in Abhängigkeit von den Positionsanzeigeeinrichtungen steuern.

16. System nach einem der Ansprüche 8 bis 15, dadurch gekennzeichnet, daß die Computerschaltkreiseinrichtungen (73) mit den Bearbeitungsstationen (12) durch eine Busleitung (30) verbunden sind, die trennbar mit den Bearbeitungsstationen verbunden ist, so daß Bearbeitungsstationen ohne weiteres hinzugefügt oder von dem System entfernt werden können.

17. System nach einem der Ansprüche 8 bis 16, dadurch gekennzeichnet, daß die Daten weiterhin eine Verweilzeitzahl enthalten, die für die tatsächliche Verweilzeit des Arbeitsmaterials an der Bearbeitungsstation einzigartig ist.

18. System nach einem der Ansprüche 8 bis 17, bei dem jedes Arbeitsmaterial von einem bestimmten Typ ist, dadurch gekennzeichnet, daß die Computerspeichereinrichtungen (78) weiterhin Einrichtungen zum Speichern von zweiten Daten enthält, die sich auf jede Bearbeitungsstation beziehen, einschließlich von Informationen, die für die Art des bei jeder Bearbeitungsstation bearbeiteten Materials kennzeichnend sind.

**Revendications**

1. Un procédé pour l'acquisition d'informations en temps réel concernant le statut d'articles pour un travail en cours d'exécution à l'intérieur d'une zone de travail, cette zone de travail comprenant une pluralité de postes de travail (12) où les matériaux sont traités, comprenant une étape de transport des matériaux à traiter depuis une zone de stockage vers les postes de travail, caractérisé en ce que le transport est effectué en réponse à des demandes en provenance des postes de travail, en ce que l'on mémorise dans des moyens de mémorisation d'ordinateur (78) des données, pour chaque matériau transporté, comprenant un numéro de poste propre au poste de travail auquel ce matériau est transporté, et en ce que l'on affiche les données pour faciliter ultérieurement le flux des matériaux dans la zone de travail.

2. Le procédé de la revendication 1, dans lequel on détermine le temps de présence de chaque matériau à un poste de travail respectif (12), lesdites données comprenant en outre un numéro de durée de présence propre à cette durée de présence.

3. Le procédé de l'une des revendications 1 ou 2, dans lequel lesdites données comprennent en outre une valeur d'objectif de durée propre à l'objectif de durée de présence du matériau respectif.

4. Le procédé de l'une des revendications, 1, 2 ou 3, dans lequel lesdites données comprennent en outre une valeur de type propre au type de matériau.

5. Procédé selon l'une des revendications 1 à 4, dans lequel lesdites données comprennent en outre une valeur de durée de transport propre à la durée nécessaire pour que chaque matériau soit transporté au poste de travail respectif.

6. Le procédé de l'une des revendications 1 à 5, dans lequel lesdites données comprennent une valeur de matériau propre à ce matériau, de sorte qu'un opérateur puisse déterminer à quel poste de travail un matériau particulier avait été traité.

7. Le procédé de l'une des revendications 1 à 6, dans lequel on indique au poste de travail lorsqu'un matériau est en route vers le poste de travail.

8. Un système (10) de contrôle du flux des matériaux à l'intérieur d'une zone de travail et de collecte de données en temps réel concernant ce flux, comprenant une pluralité de postes de travail (12) où l'on doit exécuter un travail sur les matériaux, des moyens pour transporter ces matériaux depuis une zone de stockage (14) jusqu'aux postes de travail, et des moyens d'affichage (76, 80) reliés à des moyens de circuit d'ordinateur (73) pour l'affichage de données permettant de fournir des informations en temps réel concernant les matériaux pour lesquels une exécution est en cours, caractérisé par des moyens (64, 68), à chaque poste de travail, pour indiquer que l'on demande des matériaux non travaillés au poste de travail, et en ce que les moyens pour transporter les matériaux comprennent des moyens convoyeurs comprenant des moyens (20, 24) pour diriger un matériau particulier vers un poste de travail particulier, des moyens de mémorisation d'ordinateur (78) pour mémoriser des données pour chaque matériau transporté sur les moyens convoyeurs, ces données comprenant un numéro de poste propre au poste de travail où l'on doit transporter le matériau, les moyens de circuit d'ordinateur (73) étant reliés aux moyens indicateurs (64, 68), aux moyens de direction (20, 24) et aux moyens de mémorisation d'ordinateur (78) pour commander les moyens de direction en réponse aux numéros de poste, de manière à délivrer chacun des matériaux transportés au poste de travail souhaité.

9. Le système de la revendication 8, dans lequel lesdites données comprennent en outre une valuer d'objectif de durée propre à l'objectif de durée de présence nécessaire pour exécuter le travail sur le matériau au poste de travail.

10. Le système de l'une des revendications 8 ou 9, dans lequel chacun des matériaux est d'un certain type, dans lequel lesdites données comprennent en outre un numéro de type propre au type de matériau.

11. Le système de l'une des revendications 8, 9 ou 10, dans lequel lesdites données comprennent en outre un numéro de matériau propre au matériau, de sorte qu'un opérateur devant les moyens d'affichage puisse déterminer à quel poste de travail est exécuté le travail sur chacun desdit matériaux.

12. Le système de l'une des revendications 8 à 11, caractérisé en ce que lesdites données comprennent en outre une valeur de durée de transport propre à la durée nécessaire au transport du matériau.

13. Le système de l'une des revendications 1 à 12, dans lequel chaque poste de travail comprend en outre des seconds moyens (72) reliés aux moyens de circuit d'ordinateur (73) pour indiquer qu'un matériau est en route vers ce poste de travail.

14. Le système de l'une des revendications 8 à 13, dans lequel chaque poste de travail comprend en outre des moyens (64, 68) reliés aux moyens de circuit d'ordinateur (73) pour indiquer qu'un opérateur n'est pas présent à ce poste de travail.

15. Le système de l'une des revendications 8 à 14, caractérisé en ce que les moyens convoyeurs (16, 18, 22) comprennent en outre des moyens (25) reliés aux moyens de circuit d'ordinateur pour indiquer la position des matériaux sur les moyens convoyeurs, et dans lequel les moyens de circuit d'ordinateur commandent les moyens de direction (20, 24) également en réponse à ces moyens d'indication de position.

16. Le système de l'une des revendications 8 à 15, caractérisé en ce que les moyens de circuit d'ordinateur (73) sont reliés aux postes de travail (12) par une ligne de bus (30) qui est reliée de manière déconnectable aux postes de travail, de sorte que l'on puisse aisément ajouter ou retirer des postes de travail au système.

17. Le système de l'une des revendications 8 à 16, dans lequel lesdites données comprennent en outre une valeur de durée de présence propre à la durée réelle de présence du matériau au poste de travail.

18. Le système de l'une des revendications 8 à 17, dans lequel chaque matériau est d'un certain type, dans lequel les moyens de mémorisation d'ordinateur (78) comprennent en outre des moyens pour mémoriser des secondes données concernant chaque poste de travail, comprenant des informations indiquant les types de matériaux devant être traités à chaque poste de travail.

0 088 504

FIG 1

FIG 2

FIG 3

1

FIG 4

FIG 5